# EUROPÄISCHE PATENTSCHRIFT

(11) **EP 3 735 548 B1**
(45) Veröffentlichungstag und Bekanntmachung des Hinweises auf die Patenterteilung: **04.08.2021**
(21) Anmeldenummer: 19722850.5
(22) Anmeldetag: 03.05.2019
(51) Int. Cl.: F16L 5/10, E03C 1/042

(54) **DICHTMANSCHETTE FÜR VERBUNDABDICHTUNGEN**
SEALING SLEEVE FOR COMPOSITE SEALS
MANCHETTE ÉTANCHE POUR JOINTS COMPOSITES

(30) Priorität: 04.05.2018 DE 102018110768; 04.05.2018 DE 202018102495 U
(43) Veröffentlichungstag der Anmeldung: 11.11.2020
(73) Patentinhaber: Sopro Bauchemie GmbH, 65203 Wiesbaden (DE)
(72) Erfinder: SOMMER, Mario, 65594 Runkel (DE)
(74) Vertreter: Diehl & Partner
(86) Internationale Anmeldenummer: PCT/EP2019/061444
(87) Internationale Veröffentlichungsnummer: WO 2019/211467

(56) Entgegenhaltungen:
- AU-A- 5 042 096
- DE-A1- 4 131 637
- DE-A1- 19 800 115
- US-A- 5 983 924

## Beschreibung

Die Erfindung betrifft die Abdichtung von Rohrdurchführungen in Verbindung mit Verbundabdichtungen.

Gemäß der Normen DIN 18 531, DIN 18 532, DIN 18 533 und DIN 18 534 sind Bauwerke und Bauteile so zu planen und auszuführen, dass keine Schäden durch Wasser oder Feuchtigkeit entstehen. In der Folge ist die Bausubstanz durch geeignete Abdichtungsmaßnahmen zu schützen.

Hierfür werden häufig keramische Verbundabdichtungssysteme verwendet. Diese setzen sich in der Regel aus einer keramischen Fliese oder Platte, Fugenmörtel zwischen den Fliesen oder Platten, unter der Fliese oder Platte befindlichen Fliesenkleber und einer Abdichtung zusammen. Die Abdichtung ist in der Regel zwischen dem Fliesenkleber und einer Wand oder einem Boden (beispielsweise aus Ziegel oder Beton) angeordnet und mit der Wand bzw. dem Boden verklebt. Für die Abdichtung werden flüssige oder bahnförmige Abdichtstoffe verwendet. Geeignete flüssige Abdichtstoffe können in unterschiedlichen Ausgestaltungen beispielsweise unter den Bezeichnungen FlächenDicht flexibel (FDF), DichtSchlämme Flex (DSF), TurboDichtSchlämme (TDS) oder PU-FlächenDicht (PU-FD) von der Sopro Bauchemie GmbH, Wiesbaden, Deutschland bezogen werden. Geeignete bahnförmige Abdichtstoffe können in unterschiedlichen Ausgestaltungen beispielsweise unter der Bezeichnung Abdichtungs- und EntkopplungsBahn AEB (Geschütztes Warenzeichen) von der Sopro Bauchemie GmbH, Wiesbaden, Deutschland bezogen werden. Derartige bahnförmige Abdichtstoffe bestehen beispielsweise aus reißfester Polypropylenfolie mit einer beidseitigen speziellen Vliesgewebebeschichtung aus Polypropylen und einer Dicke von ca. 0,3 mm bis 0,9 mm.

Grundsätzlich sind bahnförmige Abdichtstoffe (im Folgenden: Abdichtungsbahn) üblicherweise dünnschichtige, wasserundurchlässige und rissüberbrückende, sowie zur Erhöhung der Haftung vlieskaschierte Kunststoffbahnen die auf die abzudichtenden Flächen ganzflächig aufgeklebt werden.

Eine besondere Problematik stellen bei der Verwendung von Abdichtungsbahnen Rohrdurchführungen dar, da diese die flächige wasserdichte Bahn, die auch als Abdichtungsschicht bzw. Verbundabdichtung bezeichnet wird, durchbrechen und einen Wasserdurchtritt an der Grenze zwischen Rohr und Abdichtungsbahn ermöglichen. Zur Abdichtung von Rohrdurchführungen werden gegenwärtig blatt- bzw. folienförmige Dichtmanschetten mit einer flexiblen Innenzone (z. B. aus einem thermoplastischen Elastomer) verwendet. In der Innenzone ist ein Loch ausgebildet, das kleiner als der äußere Rohrdurchmesser ist, sodass sich die Innenzone, wenn die Dichtmanschette über das Rohrende gezogen wird, dichtend an die Außenwand des Rohres anlegt. Die Außenzone der Dichtmanschette wird flächig auf die darunter liegende Abdichtungsbahn geklebt. Das Material der Außenzone der Dichtmanschette entspricht in der Regel dem der verwendeten Abdichtungsbahn oder ist diesem bezüglich seiner bauphysikalischen Eigenschaften zumindest ähnlich.

Um eine sichere Abdichtung gegenüber Wasser zu gewährleisten, muss die Dichtfläche zwischen der flexiblen Innenzone der Dichtmanschette und dem Rohr ausreichend groß sein, d. h. das Rohr weit genug aus der Wand bzw. aus dem Boden ragen. Da bei dem in Feucht- und Nassräumen üblichen mehrschichtigen Aufbau aus Untergrund, Abdichtung, Kleber und Belag für die Endmontage einer Armatur wie beispielsweise eines Wasserhahns nur sehr wenig Spielraum bezüglich des Rohrüberstands gegeben ist, ist dieser für eine sichere Abdichtung häufig zu gering. Zudem besteht die Gefahr, dass die Dichtmanschette bei der Endmontage als störend empfunden und beschädigt oder gar entfernt wird.

Die US 5,983,924 offenbart eine Wasserableitvorrichtung um Wasser, das aus einer hinter einer Wand angebrachten Sanitärarmatur austritt, zur Vorderseite der Wand abzuleiten, wobei die Vorrichtung eine Hülse, einen inneren Flansch und einen äußeren Flansch umfasst. Vorzugsweise hat der äußere Flansch eine Wandstärke von 0,6 mm und innere Flansch eine Wandstärke von 0,7 mm.

Es besteht daher ein Bedarf an einer Dichtmanschette zur Abdichtung von Rohrdurchführungen in Verbindung mit Verbundabdichtungen (beispielsweise im Wand- und Bodenbereich unter Fliesen, Platten und keramischen Belägen), die auch bei kurzen Rohrüberständen eine sichere Abdichtung gegenüber Wasser gewährleistet.

Die vorstehende Aufgabe wird durch die Kombination der Merkmale des Anspruchs 1 gelöst. Bevorzugte Weiterbildungen finden sich in den Unteransprüchen.

Eine solche Dichtmanschette weist eine elastische Innenzone mit einer darin ausgebildeten Ringprofildichtung auf, deren Symmetrieachse sich senkrecht zur Ebene der Außenzone erstreckt, sodass sich die Ringprofildichtung bei bestimmungsgemäßem Einsatz an das Rohr anschmiegend von der Wandoberfläche in die Wand hinein erstreckt.

Die Dichtmanschette weist insbesondere eine flache, blatt- bzw. folienförmige Außenzone aus wasserdichtem Material auf, die die Innenzone aus wasserdichtem elastischem Material lateral wasserdicht umschließt. In der Innenzone ist eine von einem Ringprofil umschlossene Öffnung ausgebildet. Der radial äußere Umfang des Ringprofils schließt an einen flachen, ebenen Bereich der Innenzone, der mit der Außenzone dicht verbunden ist, oder direkt an die Außenzone an.

Unter dem Begriff "elastisch" ist in dieser Schrift eine Werkstoffeigenschaft zu verstehen, die bewirkt, dass sich ein Werkstoff unter Krafteinwirkung verformt und bei Wegfall der Krafteinwirkung in seine ursprüngliche Form zurückkehrt. Unter dem Begriff "Öffnung" ist ein Loch zu verstehen, das einen Körper vollständig durchsetzt. Der Begriff "Ringprofil" bezeichnet einen nicht-flachen ringförmigen Körper, der wenigstens eine sich in Richtung der Symmetrieachse des Rings erstreckende Ausdehnung aufweist, welche sich von der Materialstärke des Körpers unterscheidet. Im einfachsten Fall ist die Querschnittsform des Ringprofils in Umfangsrichtung des Rings konstant. In anderen Fällen ändert sich die Querschnittsform des Profils entlang von dessen Umfangsrichtung. In jedem Fall, weist das Ringprofil keine Unterbrechungen in Umfangsrichtung auf.

Bei einer Ausführungsform weist das Ringprofil einen U-förmigen Querschnitt mit zwei durch einen Steg verbundenen Schenkeln auf, wobei der Steg in einem Abstand zu einer ersten Seite des flachen, ebenen Bereichs der Innenzone bzw. der Außenzone angeordnet ist, der radial äußere Schenkel an den flachen, ebenen Bereich der Innenzone oder direkt an die Außenzone anschließt, der radial innere Schenkel die Begrenzung der Öffnung bildet und die Innenseite des U-förmigen Ringprofils an die der ersten Seite gegenüberliegende zweite Seite des flachen, ebenen Bereichs der Innenzone oder an die Außenzone anschließt.

Bei Ausführungsformen liegt der Abstand des Steges zur ersten Seite des flachen ebenen Bereichs der Innenzone im Bereich von 5 mm bis 50 mm oder von 10 bis 30 mm.

Bei Ausführungsformen liegt die Stegbreite bzw. der Abstand der Außenseiten der Schenkel am Steg im Bereich von 1 bis 15 mm.

Bei Ausführungsformen weist das die Öffnung begrenzende Schenkelende eine radial auswärts gerichtete Krümmung auf.

Bei Ausführungsformen ändert sich das Vorzeichen der Krümmung der Ringprofildichtung zwischen dem Bereich, an welchem die Innenzone an die Außenzone der Dichtmanschette angrenzt, und der in der Innenzone ausgebildeten Öffnung wenigstens einmal.

Ausführungsformen weisen eine Dichtmanschette mit einer dreilagig ausgebildeten Außenzone und einer einlagig ausgebildeten elastischen Innenzone auf.

Bei Ausführungsformen ist die Innenlage einer dreilagigen Außenzone der Dichtmanschette integral mit der elastischen Innenzone der Dichtmanschette ausgebildet, wobei die äußeren Ränder der beiden Außenlagen der Außenzone den äußeren Rand der Dichtmanschette bilden und die inneren Ränder der beiden Außenlagen die Innenzone der Dichtmanschette umschließen.

Bei anderen Ausführungsformen ist die Innenzone der Dichtmanschette aus einem von der Dichtmanschette bzw. der Innenlage der Dichtmanschette verschiedenen Material gefertigt und an einer Seite der Dichtmanschette im Innenbereich der Außenzone angebracht. Bei alternativen Ausführungsformen sind die Außenbereiche der Innenzone zwischen den äußeren Lagen im Innenbereich der Außenzone eingefasst. Die Verbindung von Innenzone und Außenzone kann mittels Kleben oder Schweißen erfolgen.

Ausführungsformen einer wie zuvor angegebenen Dichtmanschette weisen eine aus einem thermoplastischen Elastomer gebildete Innenzone und eine aus Polypropylen gebildete Außenzone auf. Dreilagige Außenzonen sind bei Ausführungsformen aus einer zwischen zwei Vliesen eingefassten Folie aufgebaut. Bei einer integral ausgebildeten Dichtmanschette ist das die Innenzone und die Innenlage der Außenzone bildende Element der Dichtmanschette aus einem thermoplastischen Elastomer gebildet, während die beiden Außenlagen der Außenzone der Dichtmanschette aus einem Polypropylenvlies gebildet sind.

Die Dicke des Materials in der elastischen Innenzone liegt bei Ausführungsformen im Bereich von 200 bis 400 µm, die der Außenzone im Bereich von 300 bis 500 µm.

Ausführungsformen einer Verwendung einer wie vorstehend beschriebenen Dichtmanschette zur Abdichtung eines durch eine Wand oder einen Boden geführten Rohres zeichnen sich dadurch aus, dass die Dichtmanschette so an der Wand oder dem Boden angeordnet und insbesondere so mit der Wand verklebt wird, dass sich das Rohr durch die in der Innenzone ausgebildete Öffnung hindurch erstreckt, und dass sich die größte Ausdehnung der Ringprofildichtung in Richtung der Symmetrieachse in die Wand oder den Boden hinein erstreckt.

Weitere Merkmale einer wie oben spezifizierten Dichtmanschette mit einer elastischen Innenzone, die eine darin ausgebildete Ringprofildichtung aufweist, ergeben sich aus der nachfolgenden Beschreibung von Ausführungsbeispielen in Verbindung mit den Ansprüchen und den Figuren. Die nachfolgende Erläuterung einiger Ausführungsbeispiele der Erfindung nimmt auf die beiliegenden Figuren Bezug, von denen
- Figur 1: eine mit einer Dichtmanschette gemäß einer Ausführungsform abgedichtete Rohrdurchführung in einer Wand in einer perspektivischen Schnittdarstellung zeigt,
- Figur 2: die mit einer Dichtmanschette gemäß Figur 1 abgedichtete Rohrdurchführung in einer Querschnittsansicht zeigt, und
- Figur 3: ein Beispiel für eine Ausgestaltung eines Ringprofils für eine Dichtmanschette gemäß einer anderen Ausführungsform zeigt und
- Figur 4: die mit einer Dichtmanschette gemäß Figur 1 abgedichtete Rohrdurchführung in einer Querschnittsansicht zeigt, wobei zusätzlich Fliesen dargestellt sind, welche die Dichtmanschette abschnittsweise bedecken.

Es sei darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Anzahl und Kombination als bei den untenstehend angeführten Beispielen verwirklicht sein. In den Figuren werden gleiche Bezugszeichen für funktionell gleichwertige oder ähnliche Charakteristiken unabhängig von speziellen Ausführungsformen verwendet.

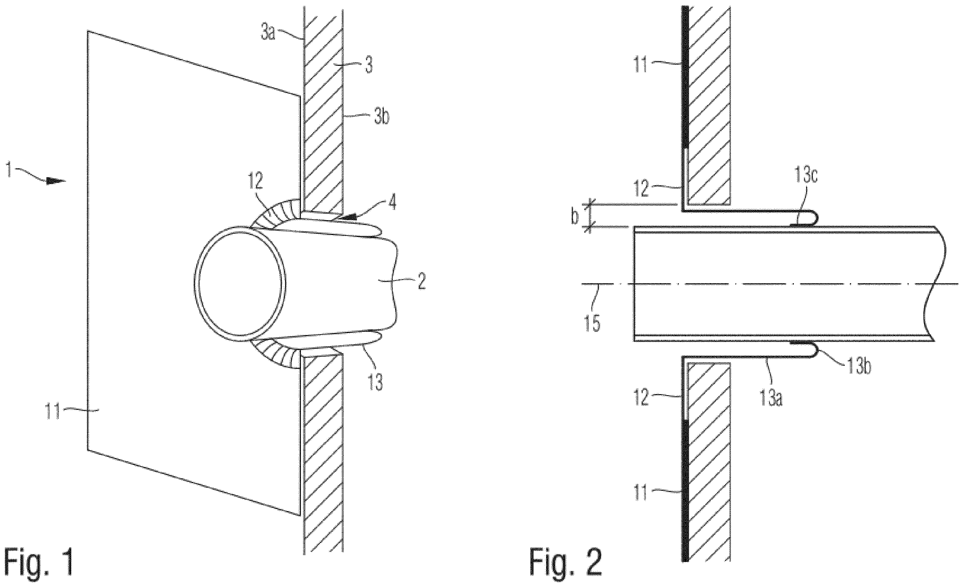

Die Darstellung von Figur 1 zeigt eine perspektivische Schnittdarstellung eines durch eine Wand geführten Rohrs, wobei die Rohrdurchführung mit einer Dichtmanschette gemäß einer Ausführungsform abgedichtet ist. Die Darstellung von Figur 2 zeigt die mit einer Dichtmanschette gemäß Figur 1 abgedichtete Rohrdurchführung in einer Querschnittsansicht.

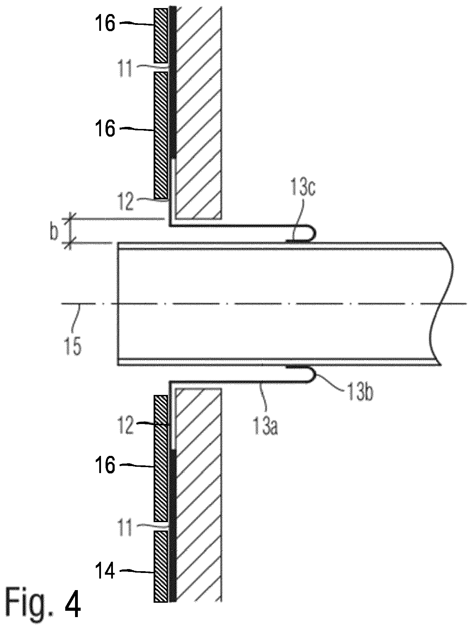

In dem dargestellten Beispiel handelt es sich bei der Wand 3 um eine Trockenbauwand mit einer Öffnung 4, durch die sich ein Rohr 2 hindurch erstreckt. Das Rohr 2 weist an der Vorderseite 3a der Wand 3 einen Überstand auf, dessen Länge sich durch den auf die Vorderseite der Wand aufzubringenden Belag bestimmt. Bei dem Belag handelt es sich üblicherweise um Fliesen, Platten oder keramische Beläge. Diese Fliesen 16 sind nur in Figur 4 gezeigt und in den Figuren 1 und 2 nicht dargestellt. In Figur 4 wurde der besseren Übersicht wegen auf die Darstellung eines Klebers zwischen Wand 3 und Dichtmanschette sowie zwischen Dichtmanschette und Fliese 16 verzichtet. In der Regel wird die Vorderseite 3a von einer auf die entsprechende Wandoberfläche aufgebrachten Abdichtungs- und Entkopplungsbahn gebildet. Anders als aus der Figur ersichtlich wird das Rohr hinter der Rückseite 3b der Wand fortgeführt. Statt einer Trockenbauwand kann das Rohr auch aus einer massiven Wand herausgeführt werden. Hierbei kann das Rohr sowohl innerhalb der Wand als auch durch die Wand geführt sein.

An der Vorderseite der Wand befindet sich eine Dichtmanschette 1, deren Außenzone 11 auf die Vorderseite der Wand 3 aufgebracht ist. Die Außenzone 11 umschließt lateral eine Innenzone 12, in der ein Ringprofil 13 ausgebildet ist. Das Ringprofil 13 erstreckt sich von der Vorderseite der Wand 3 durch den zwischen dem Rohr 2 und der Wand ausgebildeten Zwischenraum in Richtung zur Rückseite der Wand 3 und im dargestellten Fall in den Raum hinter der Rückseite der Wand.

Die Breite b des zum Einsetzen des Ringprofils erforderlichen ringförmigen Zwischenraums beträgt bei Ausführungsformen zwischen etwa 5 und 15 mm. Die Breite des Zwischenraums kann vom Durchmesser des gegenüber der Wand abzudichtenden Rohres abhängig gewählt sein. Bei massiven Wänden kann der Zwischenraum durch Ausbilden einer um das Rohr herum geführten Vertiefung in der Wand gebildet werden, wobei die Vertiefung je nach Ausführungsform der Dichtmanschette 1 etwa 10 bis etwa 30 mm in die Wand hineinreicht. Die Abmessung des Ringprofils senkrecht zur Ebene der Außenzone 11 ist vorzugsweise kleiner als die Tiefe der Vertiefung, sodass das Ringprofil im Einsatz den Boden der Ausnehmung nicht berührt. Hierdurch wird sichergestellt, dass die Dichtmanschette 1 auch im Bereich des Rohrs 2 eben an der Vorderseite 3a der Wand 3 anliegt.

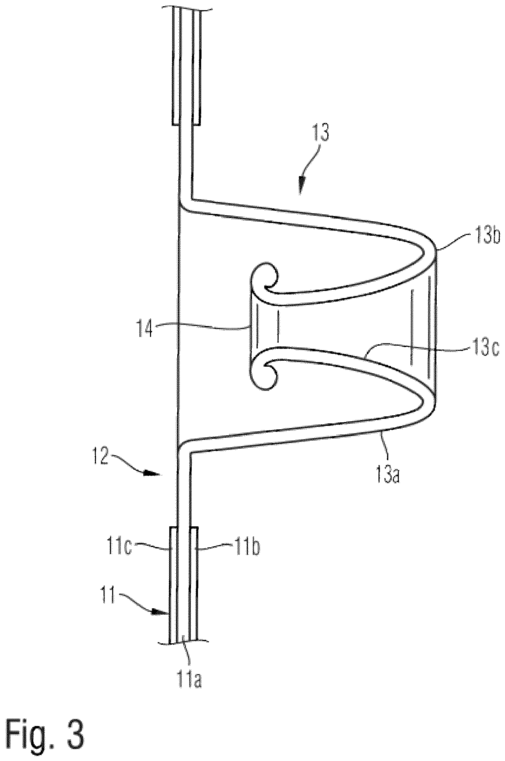

Bei der in den Figuren 1 und 2 dargestellten ersten Ausführungsform der Dichtmanschette 1 ist das Ringprofil U-förmig ausgebildet, d. h., dass der Querschnitt des Ringprofils U-förmig ist. Das U-förmige Profil weist einen ersten Schenkel 13a, einen zweiten Schenkel 13c und einen den ersten Schenkel 13a mit dem zweiten Schenkel 13c verbindenden Steg 13b auf. Der erste Schenkel 13a ist radial außerhalb des Steges 13b, der zweite Schenkel 13c ist radial innerhalb des Steges 13b angeordnet. Der erste, radial äußere Schenkel 13a verbindet den Steg 13b mit dem flachen, ebenen Bereich der Innenzone oder direkt mit der Außenzone. Das freie Ende des zweiten, radial inneren Schenkels 13c begrenzt die in der Innenzone 12 der Dichtmanschettel ausgebildete Öffnung 14 (siehe Figur 3), durch die das Rohr 2 geführt ist. Der Steg 13b ist vorzugsweise gekrümmt ausgebildet, kann aber auch gerade oder als spitze Verbindung ausgebildet sein. In den Darstellungen von Figur 1 und Figur 2 verlaufen die beiden Schenkel 13a und 13c des Ringprofils 13 in etwa parallel zueinander. Dies ist nicht unbedingt erforderlich, kann sich aber ergeben, wenn das Ringprofil in den Zwischenraum geschoben und über das Rohr 2 gestülpt wird.

Bei Ausführungsformen sind die beiden Schenkel - wie in der Querschnittsdarstellung von Figur 3 veranschaulicht - so unter einem Winkel zueinander angeordnet, dass ihr Abstand zueinander mit zunehmender Entfernung vom Steg 13b zunimmt. Durch diese Formgebung wird die Öffnung 14 beim Einführen des Rohres 2 aufgeweitet, der radial innere Schenkel 13c gegen den radial äußeren Schenkel 13a und beide Schenkel mit dem Steg radial nach außen gedrückt. Ferner kann sich zudem der Außendurchmesser des durch den radial äußeren Schenkel 13a bestimmten Teils der Ringprofildichtung 13 in Richtung weg von der ersten Seite des flachen, ebenen Bereichs der Innenzone 12 bzw. der Außenzone 13 verjüngen, sodass die Ringprofildichtung eine konische Außenform aufweist.

Bei der in Figur 3 dargestellten zweiten Ausführungsform ist die Außenzone 11 der Dichtmanschette 1 wie die Außenzone 11 der Dichtmanschette 1 von Figur 1 und Figur 2 dreilagig ausgebildet, wobei die Innenlage von einer folien- oder blattförmigen Schicht und die beiden Auslagen von vliesartigen Schichten gebildet sind. Die Materialien der Außenzone sind so gewählt, dass diese flexibel, mitunter auch elastisch ist. Unter "flexibel" ist die Eigenschaft eines Materials zu verstehen, sich unter dem Einfluss einer quer zur Oberfläche gerichteten Kraft zu verbiegen. Die das Ringprofil 13 umfassende Innenzone 12 ist aus einem folienförmigen, elastischen Material gebildet, wobei sich die Symmetrieachse 15 des Ringprofils senkrecht zur Ebene der Außenzone erstreckt. Anders als bei der in den Figuren 1 und 2 dargestellten Ausführungsform ist die Innenlage 11a der Außenzone 11 einstückig, d. h. integral, mit der Innenzone 12 der Dichtmanschette ausgebildet. Bei der Ausführungsform von Figur 1 und Figur 2 ist der flache, ebene Bereich der Innenzone 12 an der Oberfläche der Außenzone 11 angebracht, beispielsweise durch Kleben oder Schweißen.

Bevorzugte Ausgestaltungen der ersten Ausführungsform wiesen eine aus Polypropylen gebildete dreilagige Außenzone auf, wobei die Innenlage von einer Polypropylenfolie und die beiden Außenlagen jeweils aus einem Polypropylenvlies gebildet sind. Die Innenzone ist einschließlich des Ringprofils aus einem thermoplastischen Elastomer gebildet.

Bei bevorzugten Ausgestaltungen der zweiten Ausführungsform bestehen Innenlage der Außenzone und Innenzone, die einstückig ausgeführt sind, aus einem thermoplastischen Elastomer, während die Außenlagen der Außenzone jeweils aus einem Polypropylenvlies gebildet sind.

Bei einer Herstellung der Innenzone 12 in Spritzgusstechnik kann sich die Dicke des Ringprofils entlang seines Profilverlaufs ändern. Insbesondere kann die Dicke des radial inneren Schenkels 13c vom Steg zur Öffnung 14 geringer werden, sodass sich der Schenkel 13c im Bereich der Öffnung zuverlässig ganzflächig an das Rohr 2 anschmiegt. Bei anderen Ausführungsformen kann das an die Öffnung 14 der Dichtmanschette 1 anschließende Ende des Profils etwas radial nach außen verdickt sein, wodurch im Bereich der Öffnung des Ringprofils ein stärkerer Druck auf den äußeren Umfang des Rohrs 2 bewirkt wird und der radial innere Schenkel 13c sich dennoch ganzflächig an das Rohr anschmiegt. Zur einfachen Montage entspricht der Durchmesser des Ringprofils 13 am Übergang vom radial inneren Schenkel 13c zum Steg 13b in etwa dem Außendurchmesser des abzudichtenden Rohrs. Bei anderen Ausführungsformen ist die Dicke des Ringprofils entlang seines Profilverlaufs in etwa konstant.

Bei anderen Ausführungsformen bzw. Ausgestaltungen der in den Figuren dargestellten Ausführungsformen ist der radial innere Schenkel 13a wellig ausgeführt, sodass er sich, statt sich ganzflächig an das Rohr 2 anzulegen, ähnlich wie bei hintereinander angeordneten Dichtlippen in mehreren in Richtung der Symmetrieachse des Ringprofils zueinander beabstandeten ringförmigen Bereichen an das Rohr 2 anlegt. Mit dieser Anordnung kann eine größere lokale Anpresskraft erzielt werden, wobei die Sicherheit der Abdichtung durch die mehreren hintereinander angeordneten "Dichtringe" gewährleistet ist.

Zur Montage wird die Ringprofildichtung der Dichtmanschette über das Rohrende gestülpt und dann mit einem passenden, in den Innenbereich des U-förmigen Ringprofils eingeführten ringförmigen Werkzeug soweit in den Zwischenraum zwischen Rohr und Wand bzw. Boden eingeschoben, dass der flache Bereich der Dichtung (Außenzone und ebener, flacher Bereich der Innenzone) plan an der Wand anliegt. Statt mit einem ringförmigen Werkzeug kann das Ringprofil auch mit einem Stäbchen, z. B. einem Holzstäbchen in den Zwischenraum eingebracht werden.

## Patentansprüche

1. Dichtmanschette zur Abdichtung eines durch eine Wand (3) oder einen Boden geführten Rohrs (2) gegenüber der Wand bzw. dem Boden, wobei die Dichtmanschette (1) aufweist:
eine flache, blattförmige oder folienförmige wasserdichte Außenzone (11), und
eine Innenzone (12) aus einem wasserdichten elastischen Material, die von der Außenzone (11) lateral wasserdicht umschlossen ist und in der eine Ringprofildichtung (13) ausgebildet ist, deren Symmetrieachse (15) sich senkrecht zur Ebene der Außenzone (11) erstreckt und die eine Öffnung (14) umgrenzt, die kleiner als der Außendurchmesser des abzudichtenden Rohrs (2) ist, wobei die Ringprofildichtung (13) wenigstens eine sich in Richtung der Symmetrieachse (15) erstreckende Ausdehnung aufweist, welche sich von der Materialstärke der Innenzone (12) unterscheidet,
wobei die Dicke des Materials in der elastischen Innenzone im Bereich von 200 bis 400 µm und die Dicke der Außenzone im Bereich von 300 bis 500 µm liegt,
wobei das Ringprofil einen U-förmigen Querschnitt mit zwei durch einen Steg (13b) verbundenen Schenkeln (13a, 13c) aufweist, wobei der Steg (13b) in einem Abstand zu einer ersten Seite eines flachen, ebenen Bereichs der Innenzone (12) bzw. der Außenzone (11) angeordnet ist, der radial äußere Schenkel (13a) an den flachen, ebenen Bereich der Innenzone (12) oder direkt an die Außenzone (11) anschließt, der radial innere Schenkel (13c) die Begrenzung der Öffnung (14) bildet und die Innenseite des U-förmigen Ringprofils der Ringprofildichtung (13) an die der ersten Seite gegenüberliegende zweite Seite des flachen, ebenen Bereichs der Innenzone oder direkt an die Außenzone anschließt, und wobei die erste Seite die zum Kontakt mit Wand (3) vorgesehene Seite der Dichtmanschette (1) ist.

2. Dichtmanschette nach Anspruch 1, wobei der radial äußere Umfang der Ringprofildichtung (13) an einen flachen, ebenen Bereich der Innenzone (12), der mit der Außenzone (11) wasserdicht verbunden ist, oder direkt an die Außenzone (11) anschließt.

3. Dichtmanschette nach Anspruch 1 oder 2, wobei der Abstand des Steges (13b) zur ersten Seite des flachen ebenen Bereichs der Innenzone (12) bzw. der Außenzone (11) im Bereich von 5 mm bis 50 mm oder von 10 mm bis 30 mm liegt.

4. Dichtmanschette nach Anspruch 1, 2 oder 3, wobei der Abstand der Außenseiten der Schenkel am Steg im Bereich von 1 mm bis 15 mm liegt.

5. Dichtmanschette nach einem der Ansprüche 1 bis 4, wobei der Abstand der beiden Schenkel (13a, 13c) zueinander in Richtung zur ersten Seite des flachen, ebenen Bereichs der Innenzone (12) bzw. der Außenzone (13) mit zunehmender Entfernung vom Steg (13b) zunimmt.

6. Dichtmanschette nach einem der Ansprüche 1 bis 5, wobei sich der Außendurchmesser des durch den radial äußeren Schenkel (13a) bestimmten Teils der Ringprofildichtung (13) in Richtung weg von der ersten Seite des flachen, ebenen Bereichs der Innenzone (12) bzw. der Außenzone (13) verjüngt.

7. Dichtmanschette nach einem der Ansprüche 1 bis 6, wobei das die Öffnung (14) begrenzende Schenkelende eine radial auswärts gerichtete Krümmung aufweist.

8. Dichtmanschette nach Anspruch 7, wobei das das die Öffnung (14) begrenzende Schenkelende verdickt ausgebildet ist.

9. Dichtmanschette nach einem der Ansprüche 1 bis 8, wobei die Dichtmanschette (1) eine dreilagig ausgebildete Außenzone (11) und einlagig ausgebildete elastische Innenzone (12) aufweist.

10. Dichtmanschette nach Anspruch 9, wobei die Innenlage der Außenzone (11) einstückig mit der Innenzone (12) ausgebildet ist.

11. Dichtmanschette nach Anspruch 9, wobei die Außenzone (11) eine Polypropylenfolie umfasst, die zwischen zwei Polypropylenvliesen eingefasst ist.

12. Dichtmanschette nach Anspruch 10, wobei die Innenlage der Außenzone (11) der Dichtmanschette (1) zwischen zwei Polypropylenvliesen eingefasst ist.

13. Dichtmanschette nach einem der vorhergehenden Ansprüche, wobei das elastische Material der Innenzone (12) ein thermoplastisches Elastomer ist.

## Claims

1. Seal collar for sealing a pipe (2) running through a wall (3) or a floor against the wall or floor, the seal collar (1) comprising:
a flat, sheet-like or film-like waterproof outer zone (11), and
an inner zone (12) made of a waterproof elastic material, which is laterally surrounded by the outer zone (11) in a watertight manner and in which an annular profile seal (13) is formed, which centreline (15) runs at right angle to the plane of the outer zone (11) and which defines an opening (14) that is smaller than the outside diameter of the pipe (2) to be sealed, wherein the annular profile seal (13) comprises at least one extension extending along the direction of the centreline (15) and differing to that defined by the material thickness of the inner zone (12),
wherein the thickness of the material in the elastic inner zone is in the range from 200 µm to 400 µm and the thickness of the outer zone is in the range from 300 µm to 500 µm,
wherein
the annular profile has a U-shaped cross-section with two legs (13a, 13c) connected by a bridge (13b), the bridge (13b) being disposed at a distance from the first face of a flat, planar region of the inner zone (12) and the outer zone (11), respectively, the radially outer leg (13a) joining the flat, planar region of the inner zone (12) or directly the outer zone (11), the radially inner leg (13c) forming the boundary of the opening (14), and the inner surface of the U-shaped annular profile of the annular profile seal (13) joining the second face of the flat, planar region of the inner zone opposite the first face or directly the outer zone, and wherein the first face is the face of the seal collar (1) provided for contacting the wall.

2. Seal collar according to claim 1, wherein the radially outer circumference of the annular profile seal (13) joins a flat, planar region of the inner zone (12) that is connected to the outer zone (11) in a watertight manner or directly the outer zone (11).

3. Seal collar according to claim 1 or 2, wherein the distance of the bridge (13b) to the first face of the flat, planar region of the inner zone (12) or the outer zone (11) is in the range from 5 mm to 50 mm or from 10 mm to 30 mm.

4. Seal collar according to claim 1, 2 or 3, wherein the distance of the outer faces of the legs at the bridge is in the range from 1 mm to 15 mm.

5. Seat collar according to one of claims 1 to 4, wherein the distance between the two legs (13a, 13c) towards the first face of the flat, planar region of the inner zone (12) and the outer zone (11), respectively, increases with increasing distance from the bridge (13b).

6. Seal collar according to one of claims 1 to 5, wherein the outside diameter of the part of the annular profile seal (13) defined by the radially outer leg (13a) decreases in the direction away from the first face of the flat, planar region of the inner zone (12) and the outer zone (11), respectively.

7. Seal collar according to one of claims 1 to 6, wherein the end of the leg confining the opening (14) has a radially outwardly-facing curvature.

8. Seal collar according to claim 7, wherein the end of the leg confining the opening (14) has a thickened structure.

9. Seal collar according to one of claims 1 to 8, wherein the seal collar (1) has a three-layer outer zone (11) and a single-layer elastic inner zone (12).

10. Seal collar according to claim 9, wherein the inner layer of the outer zone (11) is formed integrally with the inner zone (12).

11. Seal collar according to claim 9, wherein the outer zone (11) comprises a polypropylene film sandwiched between two polypropylene non-woven fabrics.

12. Seal collar according to claim 10, wherein the inner layer of the outer zone (11) of the seal collar (1) is sandwiched between two polypropylene non-woven fabrics.

13. Seal collar according to one of the preceding claims, wherein the elastic material of the inner zone (12) is a thermoplastic elastomer.

## Revendications

1. Manchon d'étanchéité pour rendre étanche un tuyau (2) guidé à travers une paroi (3) ou un plancher par rapport à la paroi ou au plancher, le manchon d'étanchéité (1) présentant une surface d'étanchéité :
une zone extérieure (11) plate, en forme de feuille ou de film, étanche à l'eau, et
une zone intérieure (12) en matériau élastique étanche à l'eau, qui est entourée latéralement de manière étanche à l'eau par la zone extérieure (11) et dans laquelle est formé un joint profilé annulaire (13) dont l'axe de symétrie (15) s'étend perpendiculairement au plan de la zone extérieure (11) et qui délimite une ouverture (14) inférieure au diamètre extérieur du tube (2) à étancher, le joint profilé annulaire (13) présentant au moins un prolongement s'étendant dans la direction de l'axe de symétrie (15) qui est différent de l'épaisseur de matériau de la zone intérieure (12),
l'épaisseur du matériau dans la zone intérieure élastique étant comprise entre 200 et 400 *µ* m et l'épaisseur de la zone extérieure étant comprise entre 300 et 500 *µ* m, le profilé annulaire ayant une section transversale en forme de U avec deux branches (13a, 13c) reliées par une âme (13b), l'âme (13b) étant disposée à distance d'un premier côté d'une zone plane et plate de la zone intérieure (12) ou la zone extérieure (11), la branche radialement extérieure (13a) étant adjacente à la région plane et plate de la zone intérieure (12) ou directement adjacente à la zone extérieure (11), la branche radialement intérieure (13c) formant la limite de l'ouverture (14) et le côté intérieur d'un profil annulaire en forme de U du joint à profil annulaire (13) étant adjacent au deuxième côté,
opposé au premier côté, de la région plane et plate de la zone intérieure ou directement adjacent à la zone extérieure (11), zone plate de la zone intérieure opposée au premier côté ou directement à la zone extérieure, et dans lequel le premier côté est le côté du manchon d'étanchéité (1) destiné à entrer en contact avec la paroi (3).

2. Manchon d'étanchéité selon la revendication 1, dans lequel la périphérie radialement extérieure du joint profilé annulaire (13) se rattache à une région plane et plate de la zone intérieure (12), qui est reliée de manière étanche à la zone extérieure (11), ou se rattache directement à la zone extérieure (11).

3. Manchon d'étanchéité selon la revendication 1 ou 2, dans lequel la distance de la bande (13b) par rapport au premier côté de la partie plane et plate de la zone intérieure (12) ou de la zone extérieure (11) est comprise entre 5 mm et 50 mm ou entre 10 mm et 30 mm.

4. Manchon d'étanchéité selon la revendication 1, 2 ou 3, dans lequel la distance entre les côtés extérieurs des pattes au niveau de la bande est comprise entre 1 mm et 15 mm.

5. Manchon d'étanchéité selon l'une des revendications 1 à 4, dans lequel la distance des deux pattes (13a, 13c) l'une à l'autre dans la direction du premier côté de la région plane et plate de la zone intérieure (12) et de la zone extérieure (13), respectivement, augmente avec l'éloignement de la bande (13b).

6. Manchon d'étanchéité selon l'une des revendications 1 à 5, dans lequel le diamètre extérieur de la partie du joint à profile annulaire (13) définie par la branche radialement extérieure (13a) diminue dans une direction s'éloignant du premier côté de la partie plate et plane de la zone intérieure (12) et de la zone extérieure (13), respectivement.

7. Manchon d'étanchéité selon l'une des revendications 1 à 6, dans lequel l'extrémité de la branche définissant l'ouverture (14) présente une courbure dirigée radialement vers l'extérieur.

8. Manchon d'étanchéité selon la revendication 7, dans lequel l'extrémité de la jambe délimitant l'ouverture (14) est formée épaissie.

9. Manchon d'étanchéité selon l'une quelconque des revendications 1 à 8, dans lequel le manchon d'étanchéité (1) comprend une zone extérieure (11) formée en trois parties et une zone intérieure élastique (12) formée en une seule partie.

10. Manchon d'étanchéité selon la revendication 9, dans lequel la partie intérieure de la zone extérieure (11) est formée d'un seul tenant avec la zone intérieure (12).

11. Manchon d'étanchéité selon la revendication 9, dans lequel la partie extérieure (11) comprend un film de polypropylène pris en sandwich entre deux bandes de polypropylène.

12. Manchon d'étanchéité selon la revendication 10, dans lequel la couche interne de la zone externe (11) du manchon d'étanchéité (1) est prise en sandwich entre deux non-tissés en polypropylène.

13. Manchon d'étanchéité selon l'une quelconque des revendications précédentes, dans lequel le matériau élastique de la zone interne (12) est un élastomère thermoplastique.
